Europäisches Patentamt

European Patent Office

Office européen des brevets

(11) Publication number: 0 498 022 A2

# EUROPEAN PATENT APPLICATION

(21) Application number: 91104616.7

(51) Int. Cl.5: H04L 7/033

(22) Date of filing: 23.03.91

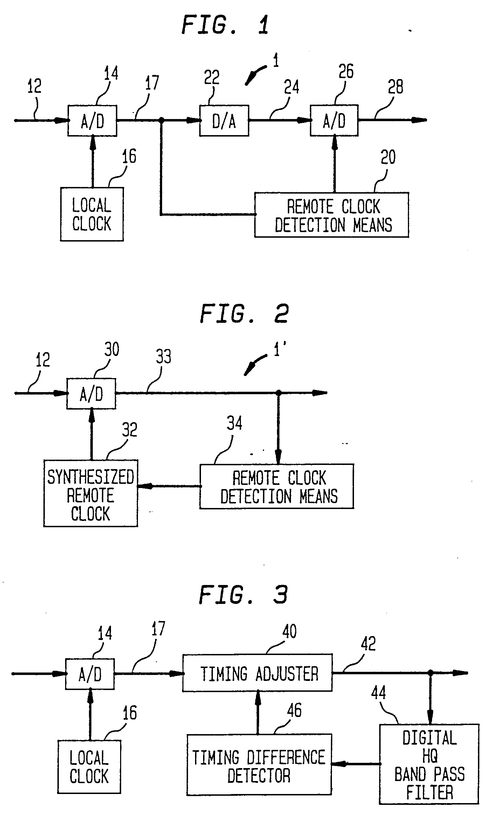

A request for correction as underlined on pages 3,5,6,7,8,10,14 as well as drawing nr I, block 20 and block 34 in figure 2 has been filed pursuant to Rule 88 EPC. A decision on the request will be taken during the proceedings before the Examining Division (Guidelines for Examination in the EPO, A-V, 2.2).

(30) Priority: 28.01.91 US 646868

(43) Date of publication of application:
12.08.92 Bulletin 92/33

(84) Designated Contracting States:
AT BE DE FR GB

(71) Applicant: INDUSTRIAL TECHNOLOGY RESEARCH INSTITUTE
195, Sec. 4, Chung-Hsin Road
Chutung, Hsinchu 31015(TW)

(72) Inventor: Shyue, Sammy
No. 8, Lane 176 Sec.1 Lung Kang Road
Chungli City, Taoyuan Hsien(TW)
Inventor: Lin, Ching-Hsiang
No.17, Lane 480
Neou-Pu Road, Hsinchu(TW)
Inventor: Yu, Ji-Shang
22 Sec. 2, Whon Ho E. Road
Yung Ho, Taipei(TW)
Inventor: Lin, Yen-Chun
124 Tung Hsing Road
Tou-Fen(TW)

(74) Representative: Cohausz & Florack
Patentanwälte
Postfach 14 01 61 Schumannstrasse 97
W-4000 Düsseldorf 1(DE)

(54) Timing recovery method and system for a receiver with A/D conversion.

(57) At a receiver in a digital communications system, an arriving analog signal is sampled using a local clock. To correct for asynchronous timing between the local receiver clock and the remote transmitter clock, the sample values obtained using the local clock are processed by a timing adjuster. The timing adjuster corrects the sample values obtained by the local clock by evaluating at a particular time a convolution of a plurality of the samples obtained by the local clock with a raised cosine function. The particular time at which the convolution is evaluated is determined by filtering the output samples of the timing adjuster with a narrow bandpass filter. A timing difference detector is utilized to evaluate certain samples output by the filter to adaptively adjust the time at which the timing adjuster evaluates the convolution.

FIG. 3

The present invention relates to a clock recovery method and system for use in a communications system.

At a receiver in a typical digital communications system, an analog-to-digital converter is utilized to convert a received analog signal into a digital format. One problem which is encountered in this type of system is that the local receiver clock and the remote transmitter clock are asynchronous. If the receiver clock is slower than the transmitter clock, after a long enough period of time, one sample of the received analog signal will be lost. On the other hand, if the local receiver clock is faster than the remote transmitter clock, after a long enough period of time, an extra sample of the received analog signal will be obtained. The problem of synchronizing the local receiver clock to the remote transmitter clock is an important problem in many telecommunications systems.

Conventionally, in a receiver, the local clock is synchronized to the transmitter clock as follows. The arriving analog signal is sampled by the local clock in a first analog-to-digital converter. From the resulting sampled data, information about the remote transmitter clock is obtained. The sampled data is then converted back to analog form by a digital-to-analog converter. The reconverted analog signal is then sampled in a second analog-to-digital converter by the remote clock which is now known at the receiver. In this way the correct sampling data are recovered at the receiver.

It is an important feature of the above-described timing recovery method that the analog signal arriving at the receiver is first sampled in the local clock. In many systems, for example, in a system with an echo canceller, it is necessary to sample the arriving signal in the local clock.

It is an object of the present invention to use digital signal processing techniques to improve the above-identified remote clock recovery method and system by eliminating the digital-to-analog converter and the second analog-to-digital converter.

The present invention is a method and system for recovering a remote transmitter clock at a receiver. An analog signal is received at the receiver. At the receiver, the analog signal is sampled with the local receiver clock. The sample values obtained using the local receiver clock are then corrected to account for any asynchronism between the local clock and the remote transmitter clock.

To correct the sample values obtained by the local clock, the sample values are processed by a timing adjuster. As is explained in greater detail below, the timing adjuster is a digital filter with adaptive coefficients.

To correct a sample value obtained by the local clock, the timing adjuster evaluates a convolution of the sample to be corrected, the N preceding samples, and the N succeeding samples, with a raised cosine function at a particular value of the time variable t.

This convolution has the form

$$f(t) = \sum_{n=-N}^{n=N} f(nT) In'(t-nT)$$

where
$f(nT)$, $n = 0$ is the sample to be corrected
$f(nT)$, $n = 1....N$ are the N preceding samples
$f(nT)$, $n = -N....-1$ are the N succeeding samples
T is the sampling interval
In'( ) is the raised cosine function.
When this convolution is evaluated at the proper value of t the output f(t) is the corrected sample value, i.e., the sample value which would have been obtained had the incoming analog signal been sampled with a local clock which is synchronous with the remote clock.

The question now is how to determine the value of the time variable t at which the convolution is evaluated by the timing adjuster. The value of t is determined adaptively using a feedback loop.

Specifically, to determine the value of t at which the convolution is evaluated, the output samples of the timing adjuster are processed by a digital HQ bandpass filter. The sample outputs of the HQ bandpass filter are transmitted to a timing difference detector. In response to the outputs of the HQ bandpass filter, the timing difference detector adaptively adjusts the time value t used by the timing adjuster to evaluate the convolution until the output samples of the timing adjuster have the appropriate corrected values. In particular, by comparing selected samples output from the HQ bandpass filter, the timing difference detector can determine information about any asynchronism between the local and remote clocks.

2

FIG 1 shows a first prior art timing recovery system.

FIG 2 shows a second prior art timing recovery system.

FIG 3 shows a timing recovery system in accordance with an illustrative embodiment of the present invention.

FIG 4 shows a timing adjuster of FIG 3 in greater detail.

FIG 5 and FIG 6 illustrate the operation of a digital HQ bandpass filter and timing difference detector which form part of the timing recovery system of FIG 3.

Before describing the inventive timing recovery method in detail, it may be helpful to briefly review some prior art timing recovery systems.

FIG 1 schematically illustrates a conventional timing recovery method and system. A signal in analog form is transmitted via a transmission channel and arrives at a receiver 1 via line 12. Typically, the analog signal is generated at a remote transmitter which modulates a digital signal onto an analog carrier through use of a clock located at the transmitter. The arriving signal at the receiver 1 is converted to digital form by the analog-to-digital converter 14 which samples the arriving analog signal using the local clock 16. From the digital samples outputted by the analog-to-digital converter 14 on line 18, the remote clock is derived using conventional remote clock detection means 20. The digital samples on line 18 are transmitted to the digital-to-analog converter 22 and reconverted to analog form on line 24. The reconverted analog signal on line 24 is then converted to digital form by a second analog-to-digital converter 26, which samples the signal using the remote clock as derived by the remote clock detection means 20. In this manner, digital data correctly sampled in accordance with the remote clock is outputted on line 28.

The timing recovery system of FIG 2 represents an improvement on the system of FIG 1. In FIG 2, the arriving analog signal on line 12 of receiver 1' is converted to digital form by the analog-to-digital converter 30 which samples the analog signal using the clock 32 so as to output samples onto line 3. The clock 32 is synchronized to the remote clock by the conventional remote clock detection means 34 which finds the remote clock from the digital samples on line 33 and then causes the clock 32 to be synchronous with the remote clock. Thus, in the clock recovery method of FIG 2, the arriving analog signal is sampled directly with the remote clock.

The system of FIG 2 represents an improvement over the system of FIG 1 in that the digital-to-analog converter 22 and the second analog-to-digital converter 26 are eliminated.

However, the system of FIG 2 is not useful for all applications. In some cases, it is necessary to sample the arriving analog signal in the local clock such as when an echo canceller is utilized.

Accordingly, as indicated above, it is an object of the present invention to utilize digital signal processing technology to provide an alternative timing recovery method wherein an arriving analog signal is first sampled using a local clock but wherein the additional digital-to-analog and analog-to-digital converters of FIG 1 are eliminated.

Such an alternative timing recovery method and system is illustrated in FIG 3. In FIG 3, an analog signal arriving on line 12 is first converted to digital form by the analog-to-digital converter 14 which samples the arriving analog signal using the local clock 16 to produce digital samples on line 18. The samples on line 18 are processed by a timing adjuster 40. The purpose of the timing adjuster 40 is to correct the sample values obtained by the local clock 16 on line 18 so that the samples outputted by the timing adjuster on line 42 have the correct values, i.e., the values that would have been obtained by sampling with the remote clock.

A feedback loop comprising the digital HQ bandpass filter 44 and timing difference detector 46 are utilized to track the timing difference between the local clock and the remote clock and insure that the proper adjustments are made by timing adjuster 40 so that the digital signal on line 42 "looks like" it was sampled by the remote clock.

The operation of the timing adjuster 40, the filter 44, and the timing difference detector 46 may be understood as follows.

It is known from the Nyquist Theorem, that the analog signal f(t) can be reconstructed from the corresponding digital samples f(nT), where T is the sampling interval, if the sampling rate 1/T of the digital signal is at least twice the signal bandwidth. Thus the analog signal f(t) can be reconstructed from the samples f(nT) using the convolution

$$f(t) = \sum_{n = -\infty}^{n = +\infty} f(nT) In(t-nT) \tag{1}$$

where

$$In(\tau) = \frac{\sin(\pi\tau/T)}{\pi\tau/T} = sinc(\tau/T),$$

where $\tau$ = t-nT

Since the sinc function is difficult to work with in a real time implementation of the present invention, equation (1) may be approximated by

$$f(t) = \sum_{n=-N}^{n=+N} f(nT) In'(t-nT), \quad n=-N,\ldots-1,0,1,\ldots,N \qquad (2)$$

where In'($\tau$) is the raised cosine function

$$In'(\tau) = \frac{sinc(\tau/T)}{1-(\tau/T)^2} \qquad (3)$$

Equation (2) represents the signal processing operation carried out by the timing adjuster 40. The timing adjuster 40 receives the values f(nT) via line 18 from analog-to-digital converter 18 and a value of $\tau$ from the timing difference detector 46. The timing adjuster 40 then performs the convolution of equation (2) to output on line 42 sample values of f(t). The filter 44 and timing difference detector 46 operate to choose a value of $\tau$ such that the samples of f(t) output on line 42 approximate very closely the samples of the incoming analog signal which would be obtained if the local clock 16 were synchronous with the remote clock.

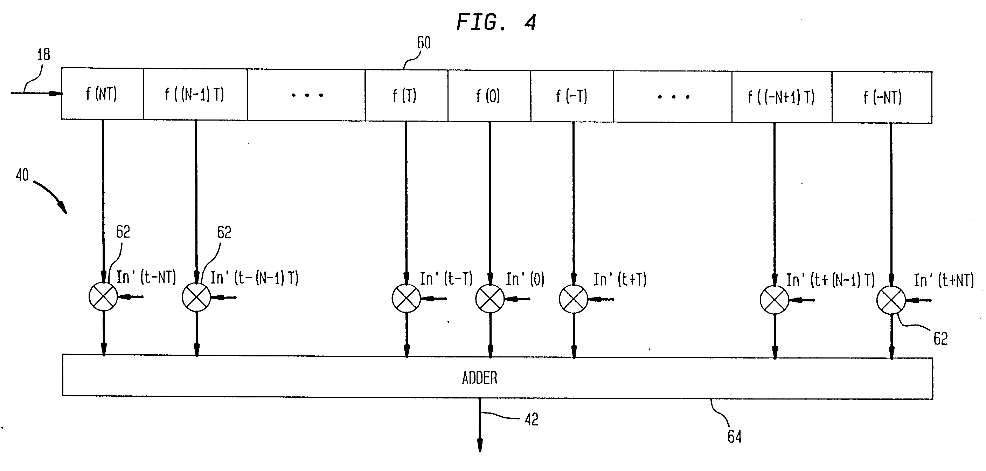

As shown in FIG 4 the timing adjuster 40 can be viewed as a digital filter. As shown in FIG 4, this digital filter comprises a register 60 which can be viewed as storing 2N+1 samples obtained by the local receiver clock from the arriving analog signal. The samples arrive at the register 60 via line 18. The register 60 stores 2N+1 samples of the arriving analog signal which are labelled f(nT), n=-N,-N+1,...,-1,0,1,....N-1,N, where T is the sampling interval. Illustratively, new samples arrive at the leftmost register 60 via line 18 at the rate of 1/T, so that at each sampling interval the rightmost sample is removed from the register 60, all the remaining samples are shifted one place to the right, and a new sample is placed in the leftmost position.

For each sampling interval T the convolution of equation (2) is evaluated. This is accomplished by utilizing the multipliers 62 to multiply each sample f(nT) by the raised cosine functions In'(t-nT). To obtain the convolution, the outputs of the multipliers 62 are added by the adder 64 and the result appears on line 42. The corrected sample on line 42 corresponds to f(nT),n=0. This corrected sample may be viewed as being a linear combination of f(nT),n=0, the N preceding samples and the N succeeding samples.

The question that remains at this point is what value of $\tau$ is utilized to evaluate the multiplier coefficients In'(t-nT), so the sample values which appear on line 42 are corrected for any discrepancy between the remote and local clocks.

The value for $\tau$ is obtained iteratively using the loop formed in FIG 3 by the timing adjuster 40, the digital HQ bandpass filter 44, and timing difference detector 46. To obtain $\tau$, consider the example where the nominal sampling frequency of the local clock and the nominal sampling frequency of the remote clock are 7200 Hz. Assume also that the central frequency of the narrow bandpass filter 44 is 2400 Hz.

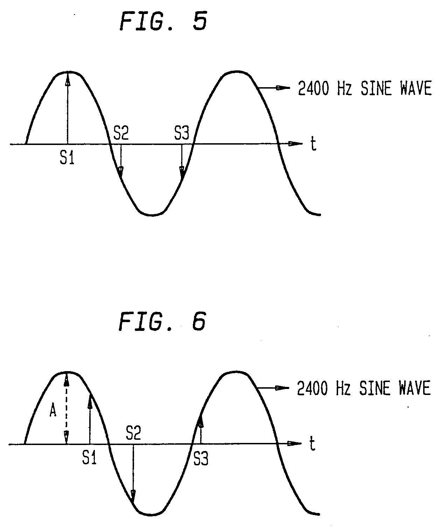

In the case that the local clock and the remote clock are synchronous, the output of the HQ bandpass filter 44 is shown in FIG 5. Three samples S1, S2, and S3 of a 2400 Hz sine wave are illustrated with S2 and S3 being equal. Note that in this case the value of $\tau$ utilized to evaluate the convolution is $\tau=0$ and f(t) in equation (2) reduces to f(nT),n=0. The reason is that In'(nT)=0 when n does not equal zero.

In the case that the local clock and the remote clock are asynchronous, the samples S1, S2, S3 outputted by the bandpass filter are as shown in FIG 6. In FIG 6, S2 does not equal S3.

The timing difference detector tests certain samples outputted by the filter 44 such as S2 and S3 to determine if the local clock is faster or slower than the remote clock. If S3>S2 it means the local clock is slower than the remote clock and t should be adapted such that $\tau \rightarrow \tau+\Delta$ where $\Delta$ is the stepsize. If S3<S2

4

it means the local clock is faster than remote clock and t should be adapted such that $\tau \to \tau\text{-}\Delta$.

In order to make the process for determining $\tau$ converge faster, it may be given an initial value. The initial value of $\tau$ can be calculated as follows. An initial value of $\tau$ for use in evaluating the convolution can be determined by the value of $\theta$ which separates S1 in FIG 5 and S1 in FIG 6, wherein in FIG 6, $S1 = A\cos\theta$.

In this case

$$\theta/120° = \tau \qquad (4)$$

In FIG 6

$$S1 = A \cos \theta \qquad (5)$$

$$S2 = A \cos (\theta + 120°) \qquad (6)$$

By eliminating A from these two equations a value of $\theta$ can be obtained. An initial value of t is then obtained from equation (4).

It should be noted, that for each value of t produced by the timing difference detector, $2N + 1$ values of the raised cosine function are needed by the timing adjuster filter 40 of FIG 4 to perform the convolution of equation (2). One approach to evaluating the raised cosine function is to store in memory tables of the raised cosine function. However, a drawback to this approach is that a large memory capacity would be required. An alternative approach to evaluating the raised cosine function is to store in memory a finite set of values of the raised cosine function and then use a Taylor series to evaluate the raised cosine function at other values, i.e.

$$\text{In}'(\tau_0 + \Delta\tau) = \text{In}'(\tau_0) + \hat{\text{I}}n(\tau_0)\Delta\tau + \hat{\text{I}}n(\tau_0)\Delta\tau^2, \, \Delta\tau = \tau\text{-}\tau_0$$

where $\hat{\text{I}}n(\,)$ and $\hat{\text{I}}n(\,)$ are the first and second derivatives of the raised cosine function.

Finally, the above-described embodiments of the invention are intended to be illustrative only. Numerous alternative embodiments of the invention may be devised by those skilled in the art without departing from the spirit and scope of the following claims. In particular, the above-described method and system for recovering the remote clock at a receiver may be implemented in real time in software or in particular embodiments in hardware.

## Claims

1. A method for digitizing an analog signal transmitted to a receiver comprising the steps of:

   at said receiver, sampling said analog signal using a local clock to obtain digital samples,

   inputting said digital samples into a first filter which evaluates at a particular value of a time variable the convolution of a plurality of said samples obtained with said local clock and an impulse response function to obtain corrected output samples,

   filtering said corrected output samples with a second narrow bandpass digital filter,

   adapting the particular value of said time variable at which said convolution is evaluated by said first filter in response to said samples outputted by said second filter, the values of said time variable being adjusted so that the corrected output samples produced by said first filter are corrected for any asynchronism between said local clock and a remote transmitter clock.

2. The method of claim 1 wherein said impulse response function is a raised cosine function.

3. A method for sampling an analog signal transmitted from a transmitter to a receiver, said method comprising the steps of

   sampling said analog signal at said receiver using a local clock to obtain digital samples,

   correcting each of said digital samples to account for any asynchronism between said local clock and a remote clock at said transmitter by evaluating a convolution of a plurality of said samples obtained from said local clock and an impulse response function at a particular value of a time variable, said particular value of said time variable being obtained by filtering the corrected digital samples with a narrow bandpass digital filter and adapting the value of the time variable used to correct the digital samples in response to the output of said band-pass digital filter until the output of said band-pass digital filter indicates that the said sample values are corrected for any discrepancy between said local clock and said remote clock.

4.  The method of claim 3 wherein said convolution is evaluated using a digital filter.

5.  A system for digitizing a received analog signal comprising,

an analog-to-digital converter for receiving said analog signal and for sampling said analog signal in accordance with a local clock to obtain digital samples,

adjustment means for receiving said digital samples produced by said analog-to-digital converter and for correcting said digital samples to account for any asynchronism between said local clock and a remote transmitter clock so as to produce corrected output samples,

a narrow bandpass digital filter for filtering the corrected output samples, and

timing detection means for detecting information about the remote clock from the output of said narrow bandpass filter and for providing the information about the remote clock to said adjustment means so that said adjustment means can correct said digital samples produced from said analog-to-digital converter to account for any asynchronism between said local clock and said remote clock.

6.  The system of claim 5 wherein said adjustment means is a filter which evaluates a convolution of a plurality of digital samples obtained from said analog-to-digital converter with an impulse response function at a particular value of a time variable, and wherein said timing detector means supplies said particular value of said time variable to said adjustment means in response to the output of said narrow bandpass filter.

7.  The system of claim 5 wherein adjustment means evaluates a convolution of the form

$$f(t) = \sum_{n=-N}^{n=+N} f(nT) In'(t-nT)$$

where f(nT) are the digital samples obtained by said analog-to-digital converter,
where T is the sampling interval,
where n is an integer which takes on the values -N,...., +N,
where f(t) is an analog signal,
where t is determined by said timing detection means, and
where In'( ) is a raised cosine function.

6

FIG. 1

FIG. 2

FIG. 3

7

## FIG. 4

EP 0 498 022 A2

# FIG. 5

2400 Hz SINE WAVE

# FIG. 6

2400 Hz SINE WAVE